Europäisches Patentamt

European Patent Office

Office européen des brevets

(19)

(11) **EP 0 767 049 B1**

(12) **EUROPEAN PATENT SPECIFICATION**

(45) Date of publication and mention
of the grant of the patent:
**04.06.2003 Bulletin 2003/23**

(51) Int Cl.⁷: **B29D 7/01**, C08J 5/18,
B32B 27/36
// B29K67:00

(21) Application number: **96307203.8**

(22) Date of filing: **02.10.1996**

(54) **A biaxially oriented polyester film for use in producing containers**

Biaxial-orientierte Polyesterfolie zur Verwendung bei der Herstellung von Behältern

Film en polyester étiré biaxialement utilisé dans la production de conteneurs

(84) Designated Contracting States:
**DE FR GB IT NL**

(30) Priority: **02.10.1995 JP 25520795**
**17.11.1995 JP 30011295**
**21.03.1996 JP 6434596**
**16.04.1996 JP 9388996**

(43) Date of publication of application:
**09.04.1997 Bulletin 1997/15**

(73) Proprietor: **TORAY INDUSTRIES, INC.**
**Tokyo 103-8666 (JP)**

(72) Inventors:
• **Kimura, Masahiro**
**Otsu-shi, Shiga, 520 (JP)**

• **Takahashi, Kohzo**
**Otsu-shi, Shiga, 520 (JP)**
• **Abe, Koichi**
**Kyoto-shi, Kyoto, 606 (JP)**

(74) Representative: **Coleiro, Raymond et al**
**MEWBURN ELLIS**
**York House**
**23 Kingsway**
**London WC2B 6HP (GB)**

(56) References cited:
EP-A- 0 372 424          EP-A- 0 386 450
EP-A- 0 625 539          FR-A- 1 128 454
LU-A- 68 310             US-A- 3 177 277
US-A- 4 717 437          US-A- 4 996 291
US-A- 5 366 783

## Description

The present invention relates to a polyester film for use in producing containers, excellent not only in formability but also in impact resistance and taste property. In particular, it relates to a biaxially oriented polyester film suitable for formation, together with a metallic sheet, into metallic cans.

Containers such as metallic cans are produced by forming, for example, by drawing and ironing a polyester film alone, or after laminating it on a substrate made of a metal or non-metallic material (e.g. paper, plastic material, fibrous material or nonwoven fabric).

Above all, the thermal lamination of a film on a metallic sheet has attracted attention, as the production of metallic cans has grown recently.

It had been widely practiced, for the purpose of preventing corrosion, to internally coat the metallic can with a solution or dispersion of any of various epoxy-based or phenol-based thermosetting resins dissolved or dispersed in any solvent, for covering the internal surface of the metal. However, such a method of covering with a thermosetting resin takes a long time for drying the coating material, to lower the productivity, and requires the use of an organic solvent in a large amount unpreferably in view of environmental pollution. To solve these problems, it has been proposed to laminate a polyester film on a steel sheet or aluminum sheet destined to be metallic cans, or on any of these metallic sheets treated on the surface by any of various methods such as plating, and then to draw and iron the film-laminated metallic sheet for production of metallic cans. In this case, the polyester film is required to have the following properties:

(1) The polyester film should be excellent in formability, without causing such defects as pinholes after completion of forming.

(2) The polyester film should not be peeled, cracked or pinholed when any impact acts on the metallic can.

(3) The polyester film should not adsorb the flavor component of the content of the metallic can or should not have any of its components dissolved to impair the flavor of the content of the metallic can.

Many proposals have been made to meet these requirements. For example, JP-A-02-305827 discloses a polyester film with a specific face orientation coefficient; JP-A-02-057339, a copolymerized polyester film with specific crystallinity; and JP-A-03-093525, a film made less oriented and less dense mainly by blending with a copolymer. However, these proposals cannot satisfy all of the above mentioned requirements, and cannot be said to be satisfactory especially in their compatibility between formability and impact resistance, or in taste property.

Furthermore, containers obtained by laminating an olefin based polymer and a metal or paper are remarkably poor in taste property.

Polyethylene terephthalate films which are substantially clear and haze free are proposed in US 4072779.

The present invention addresses the above mentioned problems presented by the prior art, and seeks to provide a biaxially oriented polyester film to be formed into containers, excellent in formability, impact resistance and taste property, particularly to provide a biaxially oriented polyester film to be suitably formed together with a metallic sheet into metallic cans.

Thus, the present invention provides a biaxially oriented polyester film comprising a polyester containing 95 mol% or more of ethylene terephthalate units as a component, which film has an amorphous Young's modulus of from 120 to 200 kg/mm$^2$ and a breaking elongation in the machine direction (S MD) and a breaking elongation in the transverse direction (S TD), satisfying [Formula 1] and [Formula 2]:

[Formula 1]

$$140\% \leq (S\ MD + S\ TD)/2 \leq 300\%$$

[Formula 2]

$$|S\ MD - S\ TD| \leq 60\%$$

Preferred embodiments of the invention will now be described. The polyester of films in accordance with the present invention contains 95 mol% or more of ethylene terephthalate units as a component, so as to allow prevention of adsorption of the flavor component of the contents of a container and provide good heat resistance. The polyester can contain another component copolymerized as far as the intended properties are not impaired. The other component may be a dicarboxylic acid selected, for example, from aromatic dicarboxylic acids such as naphthalenedicarboxylic acid, diphenyldicarboxylic acid, diphenylsulfonedicarboxylic acid, diphenoxyethanedicarboxylic acid, 5-sodiumsulfoisophthalic acid, and phthalic acid, aliphatic dicarboxylic acids such as oxalic acid, succinic acid, adipic acid, sebacic acid, dimer acid, maleic acid and fumaric acid, alicyclic dicarboxylic acids such as cyclohexynedicarboxylic acid and hydroxycarboxylic acids such as p-hydroxybenzoic acid. On the other hand, the other component may be a glycol selected, for example, from aliphatic glycols such as propanediol, butanediol, pentanediol, hexanediol and neopentyl glycol, alicyclic glycols such as cyclohexanedimethanol, aromatic glycols such as bisphenol A and bisphenol S, diethylene glycol and polyalkylene glycol. Two or more of the above dicarboxylic acids and/or glycols can also be used together.

Moreover, as far as the desired properties of a film in accordance with the present invention are not unacceptably impaired, the polyester of the present invention can be copolymerized with a polyfunctional compound such as trimellitic acid, trimesic acid or trimethylolpropane. In a film embodying the present invention, especially for applications severe in their requirements for maintaining the desired taste property, the ethylene terephthalate content is preferably 97 mol% or more. Furthermore, in the present invention, for better impact resistance and taste property, the intrinsic viscosity is preferably 0.5 to 1.5, and especially for higher impact resistance, it is preferably 0.7 to 1.5, more preferably 0.81 to 1.5, still more preferably 0.83 to 1.5. A larger intrinsic viscosity is considered to increase the chance that molecules are more intertwined, and as a result, to improve impact resistance and to minimize the flavor component adsorbability.

The intrinsic viscosity [η] can be obtained by dissolving the polymer into o-chlorophenol, and measuring the relative viscosity at 25°C.

Moreover, for better taste property, the acetaldehyde content of the polyester film is preferably 30 ppm or less, more preferably 25 ppm or less, still more preferably 20 ppm or less. An acetaldehyde content of more than 30 ppm may deteriorate the taste property. The method for keeping the acetaldehyde content of the film at 30 ppm or less is not especially limited. For example, the polyester can be annealed under reduced pressure or in an inactive gas atmosphere at a temperature lower than the melting point of the polyester, to remove the acetaldehyde produced by the thermal decomposition during the production of the polyester by polycondensation reaction. As another method, the polyester can be polymerized in a solid phase preferably under reduced pressure or in an inactive gas atmosphere at a temperature higher than 150°C and lower than the melting point. As a further alternative method, the polyester can be melt-formed into a film using a vent type extruder. As a still further alternative method, the polyester can be melt-extruded at a temperature of melting point + 30°C or less, preferably melting point + 20°C or less, more preferably melting point + 15°C or less in a short time. These methods are effective also for obtaining a film high in intrinsic viscosity.

To obtain a film high in intrinsic viscosity, it is preferable to koop the water content of the polyester chips at 100 ppm or less, preferably 50 ppm or less, still more preferably 30 ppm or less.

Furthermore, for improved taste property, the polyester film of the present invention contains preferably 1 to 500 ppm, more preferably 5 to 300 ppm, still more preferably 10 to 100 ppm of germanium. If the germanium content is too low, the effect for improving the taste property may be insufficient, and if too large, foreign matters may be generated in the polyester to lower the impact resistance and to impair the taste property. The polyester of the present invention can be improved in taste property by containing said specific amount of germanium. The method for incorporating germanium into the polyester is not especially limited, but it is preferable to add a germanium compound as a polymerization catalyst at any optional step before the production of the polyester is completed. For example a germanium compound can be added as a powder. As another method, as described in JP-B-54-022234, a germanium compound can be dissolved into the glycol used as a starting raw material of the polyester. The germanium compound can be selected, for example, from germanium dioxide, germanium hydroxide containing crystal water, germanium alkoxide compounds such as germanium tetramethoxide, germanium. tetraethoxide, germanium tetrabutoxide, and germanium ethyleneglycoxide, germanium phenoxide compounds such as germanium phenolate and germanium β-naphtholate, phosphorus-containing germanium compounds such as germanium phosphate and germanium phosphite and germanium acetate. Among them, germanium dioxide is preferable.

Furthermore, the amount of the carboxyl terminal groups of the polyester film of the present invention is preferably 40 equivalents/ton or less having regard to impact resistance and taste property. Especially when the amount of the carboxyl terminal groups is 35 equivalents/ton or less, the recoverability and impact resistance of the film are better.

Specifically, it is preferable to decrease the carboxyl terminal groups of the raw polyester by ① Solid phase polymerization ② using a known terminal blocking agent such as carbodiimide or oxazoline to a predetermined amount, and ③ extruding at a low temperature in a short time.

On the other hand, increasing the amount of carboxyl terminal groups in the surface by surface treatment, is preferable for improving the adhesive strength.

The polyester of a film of the present invention preferably has a cyclic oligomer content of 0.8 wt% or less, more preferably 0.7 wt% or less, still more preferably 0.6 wt% or less, having regard to taste property. If the oligomer content of the polyester is too large, the taste property may become poor. The method for maintaining the oligomer content of the polyester film within this range is not especially limited. The oligomer content can be maintained within this range, for example, by adopting any of the methods used for decreasing the acetaldehyde content of the polyester film.

To produce the polyester of the present invention, any conventional method can be adopted without any limitation. For example, when polyethylene terephthalate is produced using germanium dioxide as the germanium compound, the following production method can be adopted. Terephthalic component and ethylene glycol are subjected to ester interchange reaction or esterification reaction, and germanium dioxide is added. In succession, polycondensation reaction is effected at a high temperature under reduced pressure until a certain diethylene glycol content is reached, to obtain a germanium-containing polymer. In this case, direct polymerization in which any ester interchange catalyst such as a magnesium-containing compound or manganese-containing compound is not present to any substantial extent is preferable, because the taste property of the film is then less likely to be impaired. The obtained polymer is then polymerized in a solid phase at a temperature lower than the melting point of the polymer under reduced pressure or in an inactive gas atmosphere, to decrease the acetaldehyde content, for obtaining a predetermined intrinsic viscosity and a predetermined amount of carboxyl terminal groups.

In a film of the present invention, having regard to heat resistance and taste property, it is necessary to biaxially stretch a polyester containing ethylene terephthalate units as a main component. The biaxial stretching can be either simultaneous biaxial stretching or sequential biaxial stretching. We studied intensively the stretching conditions of the biaxially oriented film, and as a result, found that a biaxially oriented polyester film in which the breaking elongation in the machine direction (S MD) and the breaking elongation in the transverse direction (S TD) satisfy [Formula 1] and [Formula 2] is good in formability and impact resistance, that a biaxially oriented polyester film to be formed into containers which contains 95 mol% or more of ethylene terephthalate as a component and is 0.01 to less than 0.13 in face orientation coefficient is good in lamination property and formability, and that a biaxially oriented polyester film to be formed into containers which is 120 to 200 kg/mm$^2$ in amorphous Young's modulus is good in high speed formability.

[Formula 1]

$$140\% \leq (S\ MD + S\ TD)/2 \leq 300\%$$

S MD: Breaking elongation in the machine direction
S TD: Breaking elongation in the tranverse direction

[Formula 2]

$$|\ S\ MD - S\ TD| \leq 60\ \%.$$

In the above formulae, the breaking elongation (%) is measured by pulling a sample of 10 mm in width and 50 mm in length at a tensile speed of 300 mm/min in a 25°C 65% humidity atmosphere using a Tensilon tensile tester.

The amorphous Young's modulus is the value calculated from the following formula, being the average of the values measured in the machine direction and in the tranverse direction.

$$Ea = (1 - \phi)Ef$$

Ea : Amorphous Young's modulus
$\phi$ : Crystallinity
Ef : Young's modulus of film

$$\phi = (\rho - 1.335)/0.12$$

$\rho$ : Density measured by density gradient tube

Furthermore, having regard to formability and impact resistance, the average ((S MS + S TD)/2) of the breaking elongation in the machine direction (S MD) and the breaking elongation in the transverse direction (S TD) is preferably 160% to 300%, more preferably 180% to 280%.

For better formability at the upper part of the can, the difference in absolute value between the breaking elongation in the machine direction (S MD) and the breaking elongation in the transverse direction (S TD) is preferably 0% to 50%, more preferably 0% to 40%. This range of difference can be achieved by properly controlling the temperature, speed and ratio of longitudinal stretching and the temperature, speed and ratio of lateral stretching when the film is formed, or furthermore the preheating conditions before respective stretching, and annealing conditions.

Moreover, in a tensile test at 75°C, the stress at an elongation of 100% is preferably 12 kg/mm² or less, more preferably 11 kg/mm² or less in the machine direction or transverse direction, for better formability. This range of stress can be achieved by properly controlling the temperature, speed and ratio of stretching when the film is formed.

In the present invention, for better lamination property and formability, the face orientation coefficient is preferably in the above mentioned range, and especially having regard to lamination property, the face orientation coefficient is preferably 0.02 to 0.125, more preferably 0.02 to 0.12. This range of face orientation coefficient can be achieved by properly controlling the temperature, speed and ratio of longitudinal stretching and the temperature, speed and ratio of lateral stretching when the film is formed, or furthermore the preheating conditions before respective stretching, and annealing conditions. The density in this case is preferably 1.385 g/cm³ to 1.42 g/cm³, more preferably 1.39 g/cm³ to 1.42 g/cm³ having regard to formability.

The face orientation coefficient in this specification means fn = (Nx + Ny) / 2 - Nz, where Nx, Ny and Nz are refractive indexes in the machine direction, tranverse direction and thickness direction respectively.

In a film of the present invention, for better high speed formability, the amorphous Young's modulus is in the above mentioned range 120 to 200 kg/mm², more preferably 120 to 180 kg/mm². This range of amorphous Young's modulus can be achieved by properly controlling the temperature, speed and ratio of longitudinal stretching and the temperature, speed and ratio of lateral stretching when the film is formed, or furthermore the preheating conditions before respective stretching, and annealing conditions. Preferably it can be achieved by annealing at a high temperature or stretching at a low draw ratio. Furthermore, in a film of the present invention, the relaxation time T1ρ of 1,4 benzene ring carbon atoms in structural analysis by solid NMR is preferably 150 msec or more, more preferably 180 msec or more, still more preferably 200 msec to 600 msec for better lamination property and impact resistance. If the relaxation time T1ρ is not in this range, not only lamination property but also impact resistance, particularly the storage stability of impact resistance may be lowered.

The relaxation time T1ρ expresses molecular mobility, and a higher T1ρ value means lower mobility. This means that the T1ρ of benzene ring carbon atoms at 1,4 positions is preferably 150 msec or more in the state of a biaxially oriented film, and this controls the molecular constraint in this region, to inhibit the orientation at the time of lamination and to manifest excellent impact resistance. A relaxation time T1ρ of 150 msec or more can be achieved by applying any method to enforce molecular constraint when the film is formed, for later biaxial stretching.

Furthermore, the relaxation time T1ρ of carbonyl carbon atom in structural analysis by solid high resolution NMR is preferably 250 msec or more, more preferably 300 msec to 900 msec for even higher impact resistance. The relaxation time in this range can be achieved by applying any method to enforce molecular constraint when the film is formed, for later biaxial stretching.

In the present invention, the grain size of the (100) face obtained by X-ray diffractometry is preferably 6 nm or less, more preferably 5.5 nm to 2 nm, further more preferably 2.5 nm to 5 nm or less, particularly preferably 4.5 to 3 nm in view of the control of crystal melting at the time of lamination. Moreover, in one preferred embodiment of the invention, the film is a laminate, and it is desirable that such a film consists of at least two layers (I) and (II) of respective polyesters having respective intrinsic viscosities different from one another and the difference between the respective viscosities is from 0.01 to 0.5. At least one additional layer may also be present. When formed into a container, the layer (I) is more remote than layer (II) from the internal space defined by the container in which the contents are to be present. In an especially preferred construction, a metallic can comprises a metallic sheet defining a longitudinal extent of the can and having an internal surface onto which the laminate is adhered, layer (I) being in contact with the can and layer II being in contact with the contents of the can. Such a construction provides especially improved formability and impact resistance. Especially when impact resistance is highly respected, the layer (I) is laminated on the metallic sheet and is desirably higher in intrinsic viscosity.

Furthermore, in a film of the present invention, the thermal crystallization parameter ΔTcg of the polyester, in the or each layer, with ethylene terephthalate units as a main component preferably satisfies [Formula 3] and is more preferably 70°C to 130°C, still more preferably 80°C to 130°C, having regard to the crystallization control after completion of annealing during can production, higher impact resistance, and higher formability in forming the laminated metallic sheet after completion of annealing. The thermal crystallization parameter in this range can be achieved by controlling the catalyst, molecular weight, and by-production and addition of diethylene glycol.

[Formula 3]

$$60 \ (°C) \leq \Delta Tcg \leq 150 \ (°C)$$

$$\Delta Tcg = Tc - Tg$$

Tc: Peak temperature of crystallization in DSC (°C)

Tg: Glass transition temperature in DSC (°C)

Furthermore, in another preferred embodiment of the present invention, the film is laminated with a 0.01 to 3 μm thick adhesive layer thereon, so as to facilitate adhesion of the film to a substrate. Such a laminate is preferable for especially high ratio formability, boiling heat resistance and good corrosion prevention. The adhesive layer can be made of any optional polymer which can be either a thermoplastic resin or thermosetting resin. Preferably used polymers include epoxy resins, amide resins, acrylic resins, polyester resins, urethane resins, phenol resins, amino resins, mixtures thereof and copolymer resins. In addition, a hardening catalyst, and a crosslinking agent such as a melamine compound or epoxy compound can also be mixed.

As described before, a film of the present invention can be formed into containers, but in addition, the film can be laminated onto, for example, a paper sheet, plastic sheet, fibrous sheet, nonwoven fabric or metallic sheet, to be formed into containers, since the film is excellent in formability, adhesive strength, impact resistance and taste property. Thus, a biaxially oriented polyester film in accordance with the invention finds particular use in the manufacture of containers.

It is especially preferable to laminate the film onto a metallic sheet for container production since a film as thin as 30 μm or less can be used and since the taste property and barrier properties are excellent. Such a laminate can be prepared by a method which comprises subjecting a polyester film to biaxial orientation, laminating the biaxially oriented film onto a metallic sheet and subjecting the resulting laminate to at least one drawing operation. When a laminated metallic sheet with a metallic sheet as the substrate is formed by drawing or ironing for subsequent production of metallic cans, the metallic cans can be used either as negative pressure cans or positive pressure cans since the substrate is made of a metal.

Especially when the substrate on which the film is laminated is a metallic sheet selected from a steel sheet, aluminum sheet and such sheets subjected to surface treatment, this allows easy forming and provides cans having excellent impact resistance.

To form most effectively the film of the present invention into high performance containers, it is preferable to draw the laminated metallic sheet in one step or two or even several steps. The metal can be preferably selected from, though not limited to, metals mainly composed of iron or aluminum, having regard to formability. Especially in the case of a metallic sheet based on iron, its surface can be covered with an inorganic oxide layer, for example, a chemically converted layer formed by, e.g. chromic acid treatment, phosphate treatment, chromic acid/phosphate treatment, electrolytic chromic acid treatment, chromate treatment, chromium chromate treatment, to improve adhesive strength and corrosion resistance.

It is especially preferable to coat with chromium oxide hydrate in an amount of 6.5 to 150 mg/m² as chromium metal.

Furthermore, a plating layer of a malleable metal such as nickel, tin, zinc, aluminum, gun metal or brass, can also be provided. In the case of tin plating, the plating quantity is preferably 0.5 to 15 g/m², and in the case of nickel or aluminum, the plating quantity is preferably 1.8 to 20g/m². If the biaxially oriented polyester film of the present invention has an adhesive strength, to the metallic sheet, of 1kg/15 mm or more, it can withstand the forming procedure when carried out by ironing or drawing, and has especially good impact resistance and retention of impact resistance during storage. The adhesive strength is more preferably 1.2kg/15 mm to 6kg/15 mm. The method for enhancing the adhesive strength is not especially limited. The adhesive strength can be enhanced, for example, by controlling the crystallinity of the polyester, increasing the molecular weight, intensifying the surface activation treatment, or providing an adhesive layer, and any one or more of these methods can be optionally selected. However, use of an adhesive is preferred.

Moreover, in a laminate film of the present invention, if the adhesive strength to the metallic sheet (with adhesive or without adhesive after heating) after ironing or drawing, or after annealing subsequent to ironing or drawing is 250 g/15 mm or more, formability at the upper part, of a so-called "neck", of the metallic can is improved, and the corrosion resistance after boiling treatment and the retention of corrosion resistance during storage are improved.

The adhesive strength is more preferably 400 g/15 mm or more, further more preferably 600 g/15 mm or more, especially preferably 800 g/15 mm or more. The method for enhancing the adhesive strength is not especially limited. The adhesive strength can be enhanced, for example, by controlling the crystallinity, orientation and molecular motility of the polyester, increasing the molecular weight, intensifying the surface activation treatment, or providing an adhesive layer. Any one or more of these methods can be optionally selected. The thickness of the polyester film of the present invention is preferably 5 to 50 μm, more preferably 8 to 45 μm, still more preferably 10 to 40 μm, having regard to the formability of the laminated metallic sheet, film formability on the metal, impact resistance and taste property.

The polyester film of the present invention desirably has an average roughness Ra, at least on one side of the film, of 0,001 to 1 μm, preferably 0.005 to 0.5 μm, more preferably 0.01 to 0.1 μm, having regard to handling convenience and high speed lamination capability. Furthermore, the ratio Rt/Ta of maximum roughness Rt to average roughness Ra is preferably 3 to 40, more preferably 5 to 30, still more preferably 5 to 20, since defects such as pinholes hardly occur in the film and since high speed lamination capability is good.

Moreover, to obtain the polyester film with the above surface properties, it is preferable that inorganic and/or organic grains of 0.01 to 10 μm in average grain size are present in an amount of 0.001 to 10 wt%. To prevent the grains falling out of the film, it is preferable that inorganic grains and/or organic grains of 0.1 to 5 μm in average grain size are present in an amount of 0.005 to 3 wt%.

The inorganic grains and/or organic grains can be inorganic grains of, for example, wet or dry silica, colloidal silica, titanium oxide, calcium carbonate, calcium phosphate, barium sulfate, alumina, mica, kaolin, clay or aluminum silicate, and organic grains composed of, e.g. styrene, divinylbenzene, silicone, acrylic acid or polyester. Among them, inorganic grains of silica, calcium carbonate or aluminum silicate and organic grains composed of styrene, silicone, acrylic acid, methacrylic acid, polyester or divinylbenzene, can be preferably used. Two or more kinds of these inorganic grains and/or organic grains can also be used together.

Using grains of more than 10 μm in average grain size is not preferable since defects are liable to occur in the film. Especially when grains of 20 μm or more are present, the properties are greatly impaired. So, when the film is formed, it is preferable to use a filter which can areatly decrease the presence of foreign matter having a grain size of 20 μm or more.

The average grain size or grains in this specification is measured according to the following method. From the surface of the film, the polymer is removed by plasma low temperature incineration treatment, to expose the grains, and with the grains observed with a scanning electron microscope (SEM), the image of the grains is processed by an image analyzer. The observation is made at different places, and more than 5,000 grains are numerically processed. The number average diameter D obtained by it is identified as the average grain size.

$$D = \Sigma Di/N$$

where Di is the circle equivalent diameter of each grain, and N is the number of grains.

Furthermore, to prevent the film from having defects caused by falling out of grains during forming, internal grains can be precipitated during polyester polymerization, to produce protrusions on the surface of the film.

The method for precipitating internal grains is not especially limited. For example, a mixture containing an alkali metal compound or alkaline earth metal compound as an ester interchange catalyst can be polymerized according to a conventional method, to precipitate grains in the reaction mixture. As another method, during ester interchange reaction or polycondensation reaction, terephthalic acid can also be added. As a further alternative method, in esterification reaction, an alkali metal compound or alkaline earth metal compound can be arranged to be present before or after completion of the esterification reaction, and polycondensation reaction can be effected in the presence of a phosphorus compound, for precipitation. It is especially desirable for uniformity of grain size that the ratio $(B + 0.5A)/P$ is 0.5 to 5, where A is the number of moles of the alkali metal compound, B is the number of moles of the alkaline earth metal compound and P is the number of moles of the phosphorus compound.

The amount of the internal grains is preferably 0.01 to 2 wt%, and can be measured, for example, according to the following method.

Three hundred grams of o-chlorophenol is added to 30 g of a polyester sample, and while the mixture is stirred, the polymer is dissolved at 100°C in 1 hour. Then, an ultracentrifuge Model 40P produced by Hitachi, Ltd. is mounted with a rotor RP30, and 30 cc of the solution is injected into each cell. The ultracentrifuge is gradually rotated to reach 30,000 rpm, and one hour later, the separation of grains is completed. Furthermore, the supernatant solution is removed, and the separated grains are taken. To the grains, o-chlorophenol at room temperature is added, for homogeneous suspension, and the suspension is ultracentrifuged, and this is repeated until the melt peak of the polymer by DSC does not appear any more. The separated grains thus obtained are dried in vacuum at 120°C for 16 hours, and weighed (in this case, if a catalyst, inorganic grains, organic grains, or other additives are contained, the weights of the catalyst, inorganic grains, organic grains, or other additives should be differently identified).

The internal grains can also be used together with other inorganic grains and/or organic grains.

In the case of a laminated film, the grains can be present in any of the layers, but especially having regard to impact resistance and handling convenience, it is preferable that the grains are added into a layer not laminated on the metallic sheet. The ratio D/d of the average grain size D (μm) to the thickness d (μm) of the layer is preferably 0.05 to 50, more preferably 0.1 to 10, and for better slipperiness, the ratio is preferably 0.5 to 5.

When a layer not containing grains is formed for better impact resistance, it is preferable that the layer laminated on the metallic sheet contains substantially no grains.

In the present invention, it is preferable that the wet tension at least on one side of the film is 45 dyne/cm or more, more preferably 48 dyne/cm or more, still more preferably 50 dyne/cm or more for better formability and impact resistance.

The wet tension at least on one side of the film can be raised to 45 dyne/cm or more, for example, by any conventional method such as corona treatment, chemical treatment, flame treatment or plasma treatment. Among them, corona treatment of the surface is preferable as a method for enhancing impact resistance. As for the corona treatment, when a region of a powerful electric field locally exists as in the case where a high voltage is applied to an electric wire, discharge localized in the region occurs, and this is called corona discharge. Exposing the film to the discharge for surface treatment is called corona treatment. The corona treatment can also be effected in air, nitrogen or carbonic acid gas, and for example, the corona treatment as proposed in JP-A-01-020236 or JP-A-57-030854 can be preferably used. The intensity in the corona treatment is expressed by the E value.

The E value is obtained as W/(D•V), where W is the treatment intensity (W), D is the treatment width (m) and V is the film speed (m/min). The E value is preferably 10 to 60, more preferably 15 to 50 for higher wet tension and freedom from surface defects. If the treatment is effected at a temperature lower than the glass transition point of the polymer, the wet tension of the surface can be effectively increased. It is preferable to apply the surface treatment on the side to be laminated on the metallic sheet.

Moreover, in a film of the present invention, to improve the impact resistance after application of a heat history higher than 200°C to the film and the impact resistance after application of about 100°C water treatment (boiling treatment) to the film, an antioxidant is present preferably in an amount of 0.005 to 1 wt%, more preferably 0.005 to 0.5 wt%.

The antioxidant used is not especially limited, and can be preferably selected from conventional antioxidants including hindered phenols, hydrazines and phosphites. Among them, pentaerythrityl-tetrakis[3-(3,5-di-t-butyl-4-hydroxyphenyl) propionate], 3,5-di-t-butyl-4-hydroxybenzylphosphonate-diethyl ester, 1,3,5-trimethyl-2,4,6-tris(3, 5-di-t-butyl-4-hydroxybenzyl)benzene or tris(2,4-di-t-butylphenyl)phosphite, can be preferably used.

Having regard to taste property, it is preferable that the layer in contact with the contents of the container does not contain any antioxidant and that the layer laminated on the metallic sheet only contains an antioxidant.

In the present invention, when the film is in contact with contents of the container and another film is laminated on the other side of the metallic sheet, the latter film is preferably a biaxially oriented polyester film having an optical density of 0.3 to 1, more preferably 0.3 to 0.9, further more preferably 0.5 to 0.9, having regard to printability. Furthermore, the glossiness is preferably 50% or more, more preferably 60% or more, still more preferably 70% to 110%, for excellent printability and wear resistance.

To obtain such a film, not only the above mentioned grains, particularly titanium oxide or calcium carbonate, but also known grains with high hiding power can be used. For providing the film with the grains, any known dispersing agent or grain surface treating agent can also be used.

The film of the present invention is especially preferably a laminated film. A layer B containing 2 to 10 wt% of grains can be laminated onto a layer A already laminated onto the metallic sheet (A/B), or yet another layer similar to the layer A can be additionally laminated on the layer B, to form a laminate of A/B/A, etc. In this case, the layer B is preferably larger in grain content. Such a laminate may provide a laminate on the outside of a metal can with a layer A in contact with the metallic layer.

The polyester film of the present invention can be formed by any conventional method. A process for producing the film of the present invention is described below, by way of example

The polyester is dried as required, fed into a conventional melt extruder, extruded as a sheet from a slit die, and brought into contact with a casting drum with static electricity applied, to be cooled and solidified, for obtaining a cast sheet. For stretching, either simultaneous biaxial stretching or sequential biaxial stretching can be used. The cast sheet is stretched in the machine direction and in the tranverse direction, and annealed, to obtain a film with an intended face orientation. Preferably, having regard to film quality, it is preferable to use a tenter oven, and sequential biaxial stretching of longitudinal stretching followed by lateral stretching or simultaneous biaxial stretching of stretching longitudinally and laterally almost simultaneously is desirable. The stretching ratios in the respective directions are 1.5 to 4.0 times, preferably 1.8 to 4.0 times. Either of the stretching ratios in the machine direction and the transverse direction can be larger, and they can also be equal. The stretching speed is desirably 1,000%/min to 200,000%/min. The stretching temperature is any temperature higher than the glass transition temperature of the polyester and lower than the glass transition temperature + 80°C, usually preferably 80 to 150°C. After completion of biaxial stretching, the film is annealed, and the annealing can be effected by any conventional method in an oven or on a heated roll. The annealing temperature can be any temperature higher than 120°C and lower than the melting point, preferably 120 to 245°C. The annealing time is optional, but is preferably 1 to 60 seconds. The annealing can be effected with the film relaxed in the machine direction and/or in the transverse direction. Furthermore, re-stretching can be effected once or more in each direction, and can also be followed by annealing. When a laminated film is produced, the polymer can also be co-extruded in layers before the die, or can also be melt-extruded for lamination after casting and before or after stretching.

Furthermore, when the polyester film of the present invention is produced, as required, additives such as an antioxidant plasticizer, antistatic agent, weather resisting agent and terminal blocking agent, can also be used properly.

The methods for measuring and evaluating properties in the present invention are described below.

(1) Diethylene glycol content of polyester

Measured according to NMR (13C-NMR spectrum).

(2) Melting point of polyester

The melting point of crystallized polyester chips or film was measured by a differential scanning calorimeter (Model DSC-2 produced by Parkin Elmer) at a heating rate of 10°C/min.

(3) Intrinsic viscosity of polyester

The polymer was dissolved into o-chlorophenol, and the relative viscosity was measured at 25°C, to obtain the intrinsic viscosity.

In the case of laminated film, the intrinsic viscosity of each layer of the laminated film was measured by scraping off the layer from the surface of the film using a knife (the layer remaining after scraping off can also be washed by a solvent such as o-chlorophenol, and measured).

(4) Germanium content of polyester

Determined from the calibration curve between the germanium content of the polyester composition and the peak intensity obtained by fluorescent X-ray measurement.

(5) Acetaldehyde content

Two grams of the polyester film as a fine powder were taken and put into a pressure vessel together with ion exchange water, and extracted with water at 120°C for 60 minutes, for determination by highly sensitive gas chromatography.

(6) Amount of carboxyl terminal groups (equivalents/ton)

A polyester was dissolved in o-cresol/chloroform (7/3 by weight) at 90 to 100°C for 20 minutes, and potentiometric titration was effected by an alkali, to obtain the amount.

(7) Oligomer content

One hundred milligrams of the polyester film was dissolved into 1 ml of ortho-chlorophenol, and the cyclic trimer was measured by liquid chromatography (Model 8500 produced by Varian), as the oligomer content.

(8) Average grain size

From the surface of the film, the plastic resin was removed by plasma low temperature incineration, to expose the grains. The treatment conditions were selected to incinerate the thermoplastic resin, but not to damage the grains. The grains were observed by a scanning electron microscope (SEM), and the image of the grains was processed by an image analyzer. The observation was made at different places, and more than 5,000 grains were numerically processed, to obtain the number average grain size D as the average grain size.

$$D = \Sigma Di/N$$

where Di is a circle equivalent diameter of each grain, and N is the number of grains.

In the case of internal grains, the section of a film slice can also be observed by a transmission electron microscope.

(9) Amorphous Young's modulus and breaking elongation (%) of film

A sample 10 mm in width and 50 mm in length was pulled at a tensile speed of 300 mm/min using a Tensilon tensile tester, to measure the Young's moduli and breaking elongations (%) in the machine and tranverse directions of the film at room temperature according to ASTM-3-882-81 (Method A).

The amorphous Young's modulus, as referred to in this specification, is the value calculated from the following formula, being the average of the values measured in the machine and transverse directions.

$$Ea = (1 - \phi)Ef$$

Ea: Amorphous Young's modulus
$\phi$ : Crystallinity
Ef: Young's modulus of film

$$\phi = (\rho - 1.335)/0.12$$

$\rho$ : Density

The density was obtained according to the density gradient method in water-potassium iodide aqueous solutions.

A tensile test at 75°C was also effected, to obtain the stress at an elongation of 100%.

(10) Face orientation coefficient and refractive indexes

The refractive indexes (Nx, Ny and Nz) in the machine direction, transverse direction and thickness direction were measured, with sodium D ray (589 nm in wavelength) as the light source, using an Abbe's refractometer, and the face orientation coefficient was obtained from fn = (Nx + Ny)/2-Nz.

(11) Surface roughness of film (average roughness: Ra, maximum roughness: Rt)

The surface roughness was measured using a surface roughness tester. Measuring conditions were as follows, and the average of twenty measured values was adopted. The surface roughness tester used was a high precision thin film level difference tester ET-10 produced by Kosaka Kenkyujo.

Tip diameter of probe: 0.5 $\mu$m
Probe load: 5 mg
Measuring length: 1 mm
Cutoff: 0.08 mm
Probe speed: 4 $\mu$m/sec.

The definitions of Rt and Ra are, for example, described in Jiro Nara, "Methods for measuring and evaluating surface roughnesses (in Japanese)" (General Engineering Center, 1983).

(12) Relaxation time Tip

The solid NMR measuring instruments used were Spectrometer JNM-GX270, solid amplifier, MAS controller NM-GSH27MU and Probe NM-GSH27T VT W respectively produced by Nippon Denshi. The T1$\rho$ (longitudinal relaxation in rotational coordinates) of $^{13}$C nucleus was measured.

Measurement was effected at 24.5°C at 50% RH in a static magnetic field of 6.34 T (teslas). The resonance frequencies of $^1$H and $^{13}$C are 270.2 MHz and 67.9 MHz respectively. To eliminate the influence of anisotropy of chemical shift, the MAS (magic angle rotation) method was adopted. The rotational frequency was 3.5 to 3.7 kHz. The pulse series conditions were 90° against $^1$H, 4 $\mu$m sec in pulse width and 62.5 kHz in rocking field intensity. The contact time for cross polarization from $^1$H to $^{13}$C was 1.5 msec. The retention time $\tau$ was set at 0.001, 0.5, 0.7, 1, 3, 7, 10, 20, 30, 40 and 50 msec. After lapse of retention time $\tau$, the free induction damping (FID) of magnetization vector of $^{13}$C was measured (high output decoupling was effected to eliminate the influence of dipole interaction by $^1$H during FID measurement; and to improve the S/N ratio, calculation was effected 512 times). The pulse repetition time was in a range from 5 sec to 15 sec.

T1$\rho$ value can be usually expressed by

$$T1\rho = \Sigma(Ai) \exp (-t/T1\rho i)$$

(Ai: Rate of the component to Tlρi). The peak intensities observed for respective retention times were plotted on semilogarithmic graph paper, and the T1ρ value was obtained from the gradient. In this specification, analysis was made in a two-component system (T1ρ1: amorphous component, T1ρ2: crystalline component), and the following formula was used to obtain the value by least square fitting.

$$T1\rho = fa1 \cdot \exp (-t/T1\rho 1) + fa2 \cdot \exp (-t/T1\rho 2)$$

fa1: Rate of the component to T1ρ1
fa2: Rate of the component to T1ρ2

$$fa1 + fa2 = 1$$

(13) Grain size x

The grain size x of the (100) face was obtained by reflection X-ray diffraction using Scherrer's formula. The measuring X-ray wavelength was 0.15418 nm, and the diffraction of the (100) face was observed at a Bragg angle of about 12.7°.

(14) Thermal crystallization parameter, ΔTcg, of polyester

The polyester was dried, melted, and quickly cooled, and the thermal crystallization parameter was measured by a differential scanning calorimeter (Model SC-2 produced by Parkin Elmer) at a heating rate of 16°C/min.

(15) Antioxidant content

The film was dissolved into hexafluoroisopropanol, and acetonitrile was added to precipitate the polyester. The liquid was moderately concentrated and liquid chromatography was effected for determination.

(16) Wet tension of film surface

Measured according to JIS K 6768. As the standard solution, the following three series were used, depending on the magnitude of surface tension.
30 dyne/cm $\leq \gamma <$ 56 dyne/cm: JIS K 6768 standard solution
56 dyne/cm $\leq \gamma <$ 72 dyne/cm: ammonia water
72 dyne/cm $\leq \gamma$ : sodium hydroxide aqueous solution

(17) Adhesive strength

The adhesive strength of the film-laminated metallic sheet was obtained by a peeling test at an angle of 180° as an average of ten measured values. Also for the formed can, similar measurement was effected.

(18) Lamination property

A tin-free steel sheet was heated to 280°C and laminated with the film. The laminated metallic sheet was quickly cooled, to measure the face orientation coefficient of the film laminated on the metallic sheet. This measurement was effected with ten samples, and the difference between the maximum and minimum values of the measured face orientation coefficient values was referred to for evaluation of lamination-property according to the following criterion.

| | |
|---|---|
| Grade A | Less than 0.05 |
| Grade B | 0.005 to less than 0.01 |
| Grade C | 0.01 to less than 0.02 |
| Grade D | 0.02 or more |

(19) Formability

a. Before annealing

The film and a TFS sheet (0.25 mm thick) heated to 140~250°C were laminated at 50 m/min to have the adhesive side quickly cooled, and formed by a drawing machine (drawing ratio (maximum thickness/minimum thickness) = 2.0, drawn in a drawable temperature range from 80 to 100°C), to obtain cans. Into each can, 1 wt% sodium chloride aqueous solution was poured, and allowed to stand for one day, and a voltage of 6 V was applied between an electrode in the sodium chloride aqueous solution and the metallic can, to read the current value 3 seconds later. The average of ten cans was obtained.

| Grade A | Less than 0.001 mA |
|---------|---------------------|
| Grade B | 0.001 mA to less than 0.01 mA |
| Grade C | 0.01 mA to less than 0.05 mA |
| Grade D | 0.05 mA or more |

b. After annealing

The above laminated steel sheet was annealed at 200°C for 30 seconds, and drawn to 130% by a drawing machine, to obtain cans. Similarly, 1% sodium chloride aqueous solution was poured into each can, and allowed to stand for one day. A voltage of 6 V was applied between an electrode in the sodium chloride aqueous solution and the metallic can, to read current value 3 seconds later. The average of ten cans was obtained.

| Grade A | Less than 0.005 mA |
|---------|---------------------|
| Grade B | 0.005 mA to less than 0.01 mA |
| Grade C | 0.01 mA to less than 0.05 mA |
| Grade D | 0.05 mA or more |

c. After boiling

The cans of the above b were worked to provide a neck portion, filled with water, sealed and annealed at 100°C for 40 minutes.
They were opened, and 1 wt% sodium chloride aqueous solution was poured into each can, and allowed to stand for one day. A voltage of 6 V was applied between an electrode in the sodium chloride aqueous solution and the metallic can, to read the current value 3 seconds later. The average of ten cans was obtained.

| Grade A | Less than 0.005 mA |
|---------|---------------------|
| Grade B | 0.005 mA to less than 0.01 mA |
| Grade C | 0.01 mA to less than 0.05 mA |
| Grade D | 0.05 mA or more |

(20) Impact resistance

a. Can bottom

Formed cans were annealed at 200°C for 30 seconds, filled with 350 g of water, covered, allowed to stand at 30°C for 72 hours, and dropped from a height of 30 cm onto concrete ground, so that the bottom face of each can might form an angle of 45° against the ground. The water was removed, and the cans were masked with wax on the inside surfaces. Then, 1 wt% sodium chloride aqueous solution was poured into each can, and allowed to stand for one day. A voltage of 6 V was applied between an electrode in the sodium chloride aqueous solution and the metallic can, to read the current value 3 seconds later. The average of ten cans was obtained.

| Grade A | Less than 0.3 mA |
|---------|-------------------|
| Grade 3 | 0.3 mA to less than 0.5 mA |
| Grade C | 0.5 mA to less than 1.0 mA |

(continued)

| Grade D | 1.0 mA or more |
|---|---|

b. Retention of impact resistance after storage

The cans subjected to test a. above were allowed to stand for 7 days, after which the impact resistance was again measured.

(21) Taste property

(a) The polyester film was allowed to stand at 40°C for 14 days in contact with an aqueous flavor solution (30 ppm d-limonene aqueous solution) (500 cm$^2$ in contact area), and heated at the glass transition temperature of the thermoplastic resin A + 5°C for 30 minutes in nitrogen current, and the component expelled was analyzed by gas chromatography to determine the amount of d-limonene adsorbed per 1 g of the film for evaluation of taste property.
(b) The laminated steel sheet was pressurized at 100°C for 40 minutes in contact with water (1500 ml of distilled water for 2400 cm$^2$). The extract was properly concentrated, and the total organic carbon (TOC) was measured by a TOC meter.

Preferred embodiments of the present invention are described below in more detail with reference to the following Examples. Experimental examples 1, 2 and 10 to 15, illustrate embodiments of the present invention. Experimental Examples 3 to 9 and 16 t0 21 are included for information only.

Experimental example 1.

An ethylene glycol slurry containing colloidal silica grains different in average grain size was annealed at 190°C for 2 hours. Then, the slurry was added to the esterified reaction mixture, and the mixture was polycondensed to produce chips of polyethylene terephthalate (PET) containing the grains in predetermined amounts (using germanium dioxide as a catalyst (Ge: 40 ppm) and phosphoric acid as a thermostabilizer, intrinsic viscosity 0.71, diethylene glycol 3 mol%, $\Delta Tcg = 82°C$). This polyester was dried in vacuum at 170°C for 4 hours, fed into a single screw extruder, discharged from a die, and cooled and solidified by a cooling drum with mirror-finished surface, while static electricity was applied (7 kV), to obtain a cast film (drum rotating speed 30 m/min). The cast film was stretched to 2.9 times at 110°C in the machine direction (stretching speed 16300%/min), cooled to 40°C, preheated to 115°C for 3 seconds, stretched to 2.9 times at 118°C in the transverse direction (stretching speed 2000%/min), annealed at 190°C with 5% relaxation for 5 seconds, and corona-treated in carbonic acid gas atmosphere. The film contained 33 equivalents/ton of carboxyl terminal groups and had an acetaldehyde content of 12 ppm and an oligomer content of 0.45 wt%. The properties of the film obtained and the properties of cans are shown in Tables 1 and 8. It can be seen that the elongation, face orientation coefficient and amorphous Young's modulus were well controlled, and good formability, impact resistance and taste property could be obtained.

Experimental examples 2 to 15

Films shown in Tables 1 to 5 were produced as described for Experimental Example 1, except that the polyester production method, film forming method, lamination and the polyester used were changed. The results are shown in Table 8.
Experimental examples 2 to 9 used single-layer films, and were different in the polyester used and the film forming conditions. The physical properties of the films are shown in Table 1 to 3. In Experimental Example 2, the polyester contained 0.05 wt% of (pentaerythrityl-tetrakis[3-(3,5-di-t-butyl-4-hydroxyphenyl)propionate]) as an antioxidant, and longitudinal stretching was effected at 108°C at a ratio of 3.2 times, while lateral stretching was effected at a ratio of 3.2 times. The annealing temperature was 225°C. As a result, even though the face orientation coefficient was high, the elongation and amorphous Young's modulus were controlled well.Though the lamination property slightly declined, other properties were good.
In Experimental Example 3, PET changed in crystallization parameter by a catalyst was melt-extruded, cast, longitudinally stretched at 108°C at a ratio of 2.9 times, preheated at 118°C for 5 seconds, laterally stretched at 118°C at a ratio of 3.0 times, and annealed at 220°C. As a result, due to poor elongation balance and low adhesive strength after forming, the formability and storage stability of impact resistance were low.

In Experimental Example 4, PET changed in crystallization parameter by a catalyst and containing organic grains was melt-extruded, cast, longitudinally stretched at 108°C at a ratio of 3.0 times, preheated at 118°C for 5 seconds, laterally stretched at 2.8 times, and annealed at 220°C for 10 seconds. As a result, because of poor elongation balance and low adhesive strength after forming, the formability and the impact resistance were low.

In Experimental Example 5, PET of Experimental Example 4 was longitudinally stretched at 111°C at a ratio of 3.3 times, preheated at 115°C for 3 seconds, laterally stretched at 3.3 times, and annealed at 170°C. As a result, due to large face orientation coefficient and low adhesive strength after forming, the lamination property, formability and impact resistance were low.

In Experimental Example 6, PET rather large in diethylene glycol content and high in molecular weight was longitudinally stretched at 107°C at a ratio of 3.5 times, preheated at 115°C for 3 seconds, laterally stretched at 118°C at a ratio of 3.5 times, and annealed at 170°C. As a result, the face orientation coefficient and amorphous Young's modulus were large and the lamination property became especially poor.

In Experimental Example 7, longitudinal stretching at 108°C at a ratio of 3.0 times, preheating at 115°C for 5 seconds, lateral stretching at 2.9 times, and annealing at 180°C for 10 seconds were effected. As a result, because of poor elongation balance, high amorphous Young's modulus, and low adhesive strength after elongation, the formability and impact resistance were low.

In Experimental Example 8, PET even higher in crystallization parameter was longitudinally stretched at 108°C at a ratio of 3.1 times, preheated at 115°C for 5 seconds, laterally stretched at a ratio of 3.05 times, and annealed at 183°C for 10 seconds. As a result, because of the high crystallization parameter of polymer, the impact resistance after annealing was lower than that achieved in Experimental Example 7.

In Experimental Example 9, longitudinal stretching at 108°C at a ratio of 3.4 times, preheating at 115°C for 5 seconds, lateral stretching at 118°C a ratio of 3.2 times, and annealing at 170°C were effected. As a result, because of poor elongation balance, high face orientation coefficient and low adhesive strength after forming, the lamination property, formability and impact resistance were low.

Experimental Examples 10 to 15 used composite films and were different in the polyester used, film forming conditions, laminate composition and lamination conditions. The physical properties of the films are shown in Table 4 and 5, and the results are shown in Table 8. All the films were higher in adhesive strength and better in properties.

In Experimental Example 10, PET having an intrinsic viscosity of 1.0 . was laminated, and longitudinal stretching at 108°C at a ratio of 3.0 times, preheating at 118°C-for 3 seconds, lateral stretching at 3.0 times, and annealing at 190°C were effected to obtain a film.

In Experimental Example 11, longitudinal stretching at 108°C at a ratio of 2.9 times, preheating at 118°C for 3 seconds, lateral stretching at 118°C at 2.9 times, and annealing at 190°C were effected to obtain a film, which was then coated with an organic solvent prepared by mixing a polyamidedicarboxylic acid modified epoxy resin, phenolformaldehyde resin and hardening catalyst at a ratio by weight of 50 : 49 : 1, by a coater.

In Experimental Example 12, the film obtained in Experimental Example 11 was coated with an aqueous solution containing a mixture consisting of a polyester-urethane resin and methylolated melamine at a ratio by weight of 95 : 5 and 10 wt% of isopropanol, after corona treatment subsequent to longitudinal stretching in film formation.

In Experimental Example 13, a laminated polyester containing 0.1 wt% of an antioxidant was longitudinally stretched at 108°C at a ratio of 2.9 times, preheated at 118°C for 3 seconds, laterally stretched at 118°C at 2.9 times, annealed at 185°C, and furthermore, corona-treated in a carbonic acid gas-air mixed atmosphere on the side to be laminated onto the metallic sheet at 40 in E value.

In Experimental Example 14, a laminated polyester containing 0.1 wt% of an antioxidant was longitudinally stretched at 108°C at a ratio of 2.9 times, preheated at 118°C for 3 seconds, laterally stretched at 118°C at 2.85 times, annealed at 185°C, and furthermore, corona-treated in a carbonic acid gas-air mixed atmosphere on the side to be laminated onto the metallic sheet at 40 in E value.

In Experimental Example 15, the film of Experimental Example 1 was used as the inner face of the can. As the outer face of the can, a three-layer laminated film (17 µm thick) consisting of A : B : A = 1 : 15 : 1 (where layer A was the same as the film of Experimental Example 1 except that 10 wt% of rutile type titanium oxide grains of 0.3 µm in average grain size were used and that the diethylene glycol was increased to keep the melting point at 250°C, and layer B was the same as the film of Experimental Example 1 except that 30 wt% of rutile type titanium oxide grains of 0.3 µm in average grain size were used). The optical density was 0.78 and the glossiness was 85%, to provide good whiteness, and in addition, the amount of dust scraped during forming decreased remarkably.

Experimental examples 16 to 21

The physical properties of the films are shown in Tables 6 and 7, and the results are shown in Table 8.

Experimental example 16

A film having the properties shown in Table 6 was obtained as described for Experiment Example 4, except that polyethylene terephthalate copolymerized with 15 mol% of isophthalic acid was used as the polyester, that the longitudinal preheating and stretching temperatures were 95°C, that the longitudinal stretching ratio was 3.2 times, that the lateral preheating and stretching temperatures were 115°C, that the lateral stretching ratio was 3.3 times, and that the annealing temperature was 160°C. The results are shown in Table 8. Since the copolymerized amount was too large, the taste property and impact resistance were very poor.

Experimental example 17

A film having the properties shown in Table 6 was obtained as described for Experimental Example 16, except that the polyester used and the film forming conditions were changed (longitudinal preheating and stretching temperatures were 95°C; longitudinal stretching ratio was 3.3 times; lateral preheating and stretching temperatures were 115°C; lateral stretching ratio was 3.1 times; annealing temperature was 165°C). The results are shown in Table 8. Since the copolymerized amount was large and since the elongation balance was poor, the formability, impact resistance and taste property were poor.

Experimental examples 18 and 19

Films were obtained as described for Experimental Example 16, except that polyethylene terephthalate was annealed at 235°C for 15 seconds and that the stretching ratio was 3.1 or 3.4 times. Since none of the elongation, face orientation coefficient and amorphous Young's modulus conformed to the present invention all the properties were poor.

Experiment example 20

A film was obtained almost as described for Experimental Example 16, except that polyethylene terephthalate copolymerized with 7 mol% of isophthalic acid was used. Since the copolymerized amount was large and since the face orientation coefficient and amorphous Young's modulus were large, the lamination property, formability, impact resistance and taste property were poor.

Experimental example 21

A film was obtained as described for Experimental Example 16 except that polyethylene terephthalate copolymerized with 10 mol% of sebacic acid was used as the polyester, that the stretching temperature was 70°C and that the annealing temperature was 175°C. Since the copolymerized amount was large and since the face orientation coefficient was large, the lamination property, formability, impact resistance and taste property were poor.

Table 1

| | | Experimental example 1 | Experimental example 2 | Experimental example 3 |
|---|---|---|---|---|
| p o l y e s t e r | Polyester | PET | PET | PET |
| | Ethylene terephchalate component (mol%) | 97 | 97 | 98 |
| | Tm (°C) | 254 | 254 | 256 |
| | $\Delta$Tcg (°C) | 82 | 82 | 68 |
| | DEG (mol%) | 3 | 3 | 2 |
| | Intrinsic viscosity | 0.71 | 0.71 | 0.63 |
| | Material of grains | Silica, Silica | Silica, Silica | Silica |
| | Average grain size (μm) | 0.2, 0.8 | 0.2, 0.8 | 0.5 |
| | Content (wt%) | 0.3, 0.05 | 0.3, 0.05 | 0.2 |

Table 1   (continued)

|  |  | Experimental example 1 | Experimental example 2 | Experimental example 3 |
|---|---|---|---|---|
| properties of film | Thickness (µm) | 25 | 25 | 22 |
| | (SMD+STD)/2 (%) | 212 | 182 | 170 |
| | \|SMD-STD\| (%) | 30 | 20 | 65 |
| | Density (g/cm$^3$) | 1.387 | 1.399 | 1.395 |
| | Face orientation coefficient (-) | 0.118 | 0.134 | 0.123 |
| | Amorphous Young's modulus (kg/mm$^2$) | 182 | 175 | 190 |
| | Intrinsic viscosity | 0.68 | 0.68 | 0.61 |
| | Relaxation time 134 (ppm) | 211 | 220 | 205 |
| | 164 (ppm) | 348 | 386 | 355 |
| | Grain size (nm) | 3.6 | 5.3 | 4.5 |
| | Surface roughness Ra(µm) | 0.012 | 0.016 | 0.010 |
| | Rt(µm) | 0.165 | 0.240 | 0.162 |
| | Wet tension (dyne/cm) | 48 | 41 | 42 |
| | Adhesive strength Sheet (g/15mm) | 1500 | 1500 | 1400 |
| | Arter forming (g/15mm) | 420 | 380 | 230 |

Table 2

|  |  | Experimental example 4 | Experimental example 5 | Experimental example 6 |
|---|---|---|---|---|
| polyester | Polyester | PET | PET | PET |
| | Ethylene terephthalate component (mol%) | 98 | 98 | 96 |
| | Tm (°C) | 256 | 256 | 250 |
| | ΔTcg (°C) | 65 | 65 | 82 |
| | DEG (mol%) | 2 | 2 | 4 |
| | Intrinsic viscosity | 0.63 | 0.63 | 0.8 |
| | Material of grains | Crosslinked polystyrene | Crosslinked polystyrene | Crosslinked polystyrene |
| | Average grain size (µm) | 0.3 | 0.3 | 0.3 |
| | Content (wt%) | 0.2 | 0.2 | 0.2 |

Table 2   (continued)

| properties of film | | | Experimental example 4 | Experimental example 5 | Experimental example 6 |
|---|---|---|---|---|---|
| | | Thickness (μm) | 25 | 25 | 25 |
| | | (SMD+STD)/2 (%) | 169 | 176 | 150 |
| | | \|SMD-STD\| (%) | 63 | 20 | 25 |
| | | Density (g/cm$^3$) | 1.398 | 1.383 | 1.383 |
| | | Face orientation coefficient (-) | 0.129 | 0.132 | 0.145 |
| | | Amorphous Young's modulus (kg/mm$^2$) | 185 | 215 | 258 |
| | | Intrinsic viscosity | 0.61 | 0.61 | 0.76 |
| | | Relaxation time 134 (ppm) | 198 | 180 | 185 |
| | | 164 (ppm) | 353 | 305 | 298 |
| | | Grain size (nm) | 5.2 | 2.9 | 2.9 |
| | | Surface roughness Ra(μm) | 0.019 | 0.020 | 0.018 |
| | | Rt(μm) | 0.275 | 0.320 | 0.260 |
| | | Wet tension (dyne/cm) | 42 | 42 | 42 |
| | | Adhesive strength Sheet (g/15mm) | 900 | 920 | 1200 |
| | | Arter forming (g/15mm) | 200 | 220 | 330 |

Table 3

| polyester | | | Experimental example 7 | Experimental example 8 | Experimental example 9 |
|---|---|---|---|---|---|
| | | Polyester | PET | PET | PET |
| | | Ethylene terephthalate component (mol%) | 98 | 98.5 | 98 |
| | | Tm (°C) | 256 | 256 | 256 |
| | | ΔTcg (°C) | 65 | 59 | 65 |
| | | DEG (mol%) | 2 | 1.5 | 2 |
| | | Intrinsic viscosity | 0.68 | 0.67 | 0.68 |
| | | Material of grains | Calcium carbonate | Calcium carbonate | Calcium carbonate |
| | | Average grain size (μm) | 0.8 | 0.8 | 0.8 |
| | | Content (wt%) | 0.2 | 0.2 | 0.2 |

Table 3   (continued)

| | | Experimental example 7 | Experimental example 8 | Experimental example 9 |
|---|---|---|---|---|
| properties of film | Thickness (µm) | 25 | 25 | 20 |
| | (SMD+STD)/2 (%) | 165 | 169 | 172 |
| | \|SMD-STD\| (%) | 62 | 61 | 63 |
| | Density (g/cm$^3$) | 1.386 | 1.388 | 1.383 |
| | Face orientation coefficient (-) | 0.126 | 0.129 | 0.132 |
| | Amorphous Young's modulus (kg/mm$^2$) | 218 | 222 | 218 |
| | Intrinsic viscosity | 0.65 | 0.64 | 0.65 |
| | Relaxation time 134 (ppm) | 202 | 188 | 189 |
| | 164 (ppm) | 347 | 310 | 309 |
| | Grain size (nm) | 3.9 | 4.1 | 2.9 |
| | Surface roughness Ra(µm) | 0.025 | 0.023 | 0.025 |
| | Rt(µm) | 0.035 | 0.331 | 0.375 |
| | Wet tension (dyne/cm) | 42 | 42 | 42 |
| | Adhesive strength Sheet (g/15mm) | 1150 | 950 | 1100 |
| | Arter forming (g/15mm) | 240 | 200 | 230 |

Table 4

| | | Experimental example 10 | Experimental example 11 | Experimental example 12 |
|---|---|---|---|---|
| polyester | Polyester | PET | PET | PET |
| | Ethylene terephthalate component (mol%) | 98 | 97 | 97 |
| | Tm (°C) | 256 | 254 | 254 |
| | ΔTcg (°C) | 70 | 82 | 82 |
| | DEG (mol%) | 2 | 3 | 3 |
| | Intrinsic viscosity | 0.71 | 0.71 | 0.71 |
| | Material of grains | Silica, Silica | Silica, Silica | Silica, Silica |
| | Average grain size (µm) | 0.2, 0.8 | 0.2, 0.8 | 0.2, 0.8 |
| | Content (wt%) | 0.3, 0.05 | 0.3, 0.05 | 0.3, 0.05 |

Table 4   (continued)

| | | Experimental example 10 | Experimental example 11 | Experimental example 12 |
|---|---|---|---|---|
| Laminated polymer | Polymer and features | PET Intrinsic Viscosity 1.0 (Ge: 30 ppm) DEG: 4.5 mol% Thickness: 10 μm | Polyamidedicarboxylic acid modified epoxy resin + Phenolformaldehyde resin + Hardening catalyst Thickness: 2 μm | Polyesterurethane resin + Melamine compound Thickness: 0.1 μm |
| properties of film | Total thickness (μm) | 25 | 25 | 25 |
| | (SMD+STD)/2 (%) | 175 | 212 | 212 |
| | \|SMD-STD\| (%) | 20 | 30 | 30 |
| | Density (g/cm$^3$) | 1.387 | 1.391 | 1.391 |
| | Face orientation coefficient (-) | 0.125 | 0.118 | 0.118 |
| | Amorphous Young's modulus (kg/mm$^2$) | 195 | 182 | 182 |
| | Intrinsic viscosity | 0.77 | 0.68 | 0.68 |
| | Relaxation time 134 (ppm) | 220 | 211 | 211 |
| | 164 (ppm) | 358 | 348 | 348 |
| | Grain size (nm) | 4.0 | 4.1 | 4.1 |
| | Surface roughness Ra(μm) | 0.013 | 0.012 | 0.012 |
| | Rt(μm) | 0.170 | 0.165 | 0.165 |
| | Wet tension (dyne/cm) | 43 | -(42) | -(42) |
| | Adhesive strength Sheet (g/15mm) | 1400 | 1200 | 1200 |
| | Arter forming (g/15mm) | 530 | 400 | 350 |

Table 5

| | | | Experimental example 13 | Experimental example 14 |
|---|---|---|---|---|
| polyester | | Polyester | PET | PET |
| | | Ethylene terephthalate component (mol%) | 98 | 97 |
| | | Tm (°C) | 256 | 254 |
| | | $\Delta$Tcg (°C) | 70 | 82 |
| | | DEG (mol%) | 2 | 3 |
| | | Intrinsic viscosity | 0.71 | 0.68 |
| | | Material of grains | Silica, Silica | Silica, Silica |
| | | Average grain size ($\mu$m) | 0.2, 0.8 | 0.2, 0.8 |
| | | Content (wt%) | 0.3, 0.05 | 0.3, 0.05 |
| Laminated polymer | | Polymer and features | PET Intrinsic Viscosity 1.0 (Ge:30 ppm) DEG: 4.5 mol% Thickness: 5 $\mu$m Antioxidant | PET Intrinsic Viscosity 0.8 (Ge:30 ppm) DEG: 3.5 mol% Thickness: 5 $\mu$m Antioxidant |

Table 5   (continued)

| | | Experimental example 13 | Experimental example 14 |
|---|---|---|---|
| p r o p e r t i e s  o f  f i l m | Total thickness (µm) | 25 | 25 |
| | (SMD+STD)/2 (%) | 185 | 198 |
| | \|SMD-STD\| (%) | 10 | 15 |
| | Density (g/cm$^3$) | 1.387 | 1.388 |
| | Face orientation coefficient (-) | 0.121 | 0.118 |
| | Amorphous Young's modulus (kg/mm$^2$) | 190 | 187 |
| | Intrinsic viscosity | 0.72 | 0.68 |
| | Relaxation time 134 (ppm) | 217 | 221 |
| | 164 (ppm) | 359 | 349 |
| | Grain size (nm) | 3.8 | 3.6 |
| | Surface roughness Ra(µm) | 0.012 | 0.012 |
| | Rt(µm) | 0.190 | 0.169 |
| | Wet tension (dyne/cm) | 53 | 54 |
| | Adhesive strength Sheet (g/15mm) | 1400 | 1300 |
| | Arter forming (g/15mm) | 820 | 680 |

Table 6

| | | Experimental example 16 | Experimental example 17 | Experimental example 18 |
|---|---|---|---|---|
| P o l y e s t e r | Polyester | PET/1 | PST/1 | PET |
| | Ethylene terephthalate component (mol%) | 83.5 | 83.5 | 98 |
| | Tm (°C) | 222 | 222 | 256 |
| | ΔTcg (°C) | 115 | 115 | 58 |
| | DEG (mol%) | 1.5 | 1.5 | 2 |
| | Intrinsic viscosity | 0.65 | 0.65 | 0.63 |
| | Material of grains | Silica | Silica | Silica |
| | Average grain size (µm) | 0.8 | 0.8 | 0.5 |
| | Content (wt%) | 0.1 | 0.1 | 0.2 |

Table 6   (continued)

| | | Experimental example 16 | Experimental example 17 | Experimental example 18 |
|---|---|---|---|---|
| Properties of film | Thickness (μm) | 25 | 25 | 20 |
| | (SMD+STD)/2 (%) | 195 | 215 | 138 |
| | \|SMD-STD\| (%) | 50 | 65 | 35 |
| | Density (g/cm$^2$) | 1.370 | 1.375 | 1.409 |
| | Face orientation i coefficient (-) | 0.128 | 0.125 | 0.155 |
| | Amorphous Young's modulus (kg/mm$^2$) | 230 | 225 | 225 |
| | Intrinsic viscosity | 0.62 | 0.62 | 0.61 |
| | Grain size (nm) | 2.5 | 2.6 | 6.3 |
| | Surface roughness Ra(μm) | 0.022 | 0.022 | 0.012 |
| | Rt(μm) | 0.375 | 0.340 | 0.190 |

Table 7

| | | Experimental example 19 | Experimental example 20 | Experimental example 21 |
|---|---|---|---|---|
| Polyester | Polyester | PET | PET/1 | PET/S |
| | Ethylene terephchalate component (mol %) | 98 | 81.5 | 88 |
| | Tm (°C) | 256 | 239 | 230 |
| | ΔTcg (°C) | 58 | 95 | 90 |
| | DEG (mol%) | 2 | 1.5 | 2 |
| | Intrinsic viscosity | 0.63 | 0.65 | 0.66 |
| | Material of grains | Silica | Silica | Silica |
| | Average grain size (μm) | 0.8 | 0.8 | 0.5 |
| | Content (wt%) | 0.1 | 0.1 | 0.2 |

Table 7   (continued)

| | | Experimental example 19 | Experimental example 20 | Experimental example 21 |
|---|---|---|---|---|
| Properties of film | Thickness (μm) | 20 | 25 | 20 |
| | (SMD+STD)/2 (%) | 148 | 180 | 168 |
| | \|SMD-STD\| (%) | 65 | 30 | 45 |
| | Density (g/cm$^3$) | 1.409 | 1.373 | 1.384 |
| | Face orientation coefficient (-) | 0.145 | 0.135 | 0.145 |
| | Amorphous Young's modulus (kg/mm$^2$) | 238 | 226 | - 205 |
| | Intrinsic viscosity | 0.61 | 0.62 | 0.63 |
| | Grain size (nm) | 6.1 | 2.7 | 3.8 |
| | Surface roughness Ra(μm) | 0.012 | 0.023 | .0.013 |
| | Rt(μm) | 0.190 | 0.352 | 0.198 |

Table 8

| | Lamination property | Formability | | | Impact resistance | | Taste property | |
|---|---|---|---|---|---|---|---|---|
| | | a | b | c | a | b | a (μg) | b (ppm) |
| Experimental example 1 | A | A | A | B | A | A | 14 | 1.3 |
| Experimental example 2 | B | A | A | B | A | A | 14 | 1.3 |
| Experimental example 3 | A | B | B | B | A | B | 16 | 1.5 |
| Experimental example 4 | A | B | B | B | B | B | 16 | 1.5 |
| Experimental example 5 | B | B | B | B | B | B | 16 | 1.5 |
| Experimental example 6 | B | B | B | B | B | A | 12 | 1.2 |
| Experimental example 7 | A | B | B | B | B | B | 14 | 1.4 |
| Experimental example 8 | B | B | B | B | B | B | 14 | 1.4 |
| Experimental example 9 | B | B | B | B | B | B | 14 | 1.4 |
| Experimental example 10 | A | A | A | A | A | A | 10 | 1.1 |
| Experimental example 11 | A | A | A | A | A | A | 12 | 1.2 |
| Experimental example 12 | A | A | A | A | A | A | 13 | 1.3 |
| Experimental example 13 | A | A | A | A | A | A | 11 | 1.2 |
| Experimental example 14 | A | A | A | A | A | A | 13 | 1.3 |
| Experimental example 15 | A | A | A | B | A | A | 14 | 2.7 |
| Experimental example 16 | B | B | B | C | B | D | 35 | 2.7 |
| Experimental example 17 | B | B | C | C | B | D | 35 | 1.6 |
| Experimental example 18 | D | C | D | D | B | C | 18 | 1.6 |
| Experimental example 19 | D | C | D | D | B | C | 17 | 2.6 |
| Experimental example 20 | C | B | C | C | C | D | 33 | 1.6 |

Table 8 (continued)

| | Lamination property | Formability | | | Impact resistance | | Taste property | |
|---|---|---|---|---|---|---|---|---|
| | | a | b | c | a | b | a ($\mu$g) | b (ppm) |
| Experimental example 21 | D | C | C | D | C | D | 85 | 3.7 |

Industrial applicability

The biaxially oriented polyester film to *be* formed into containers of the present invention is excellent in the formability when formed into containers, and also excellent in taste property, especially in the taste property after boiling, being able to be suitably used for metallic cans produced by forming. This is illustrated by the above results for Experimental Examples 1, 2 and 10 to 15.

**Claims**

1. A biaxially oriented polyester film comprising a polyester containing 95 mol% or more of ethylene terephthalate units as a component, which film has an amorphous Young's modulus of from 120 to 200 kg/mm$^2$ and a breaking elongation in the machine direction (S MD) and a breaking elongation in the transverse direction (S TD), satisfying [Formula 1] and [Formula 2]

[Formula 1]

$$140\% \leq (S\ MD + S\ TD)/2 \leq 300\%$$

S MD: Breaking elongation in the machine direction
S TD: Breaking elongation in the transverse direction

[Formula 2]

$$|S\ MD - S\ TD| \leq 60\%$$

2. A biaxially oriented polyester film according to claim 1, having a face orientation coefficient of from 0.01 to less than 0.13.

3. A biaxially oriented polyester film according to claim 1 or 2, wherein the relaxation time T1$\rho$ of 1,4 benzene ring carbon atoms in the structural analysis by solid high resolution NMR is 150 msec or more.

4. A biaxially oriented polyester film according to any preceding claim, wherein the relaxation time T1$\rho$ of carbonyl carbon atom in the structural analysis by solid high resolution NMR is 250 msec or more.

5. A biaxially oriented polyester film according to any preceding claim, wherein the grain size of the (100) face obtained by X-ray diffractometry is 6 nm or less.

6. A biaxially oriented polyester film according to any preceding claim, which film consists of at least two layers (I) and (II) of respective polyesters having respective intrinsic viscosities (I) and (II) different from one another and the difference between the said respective viscosities (I) and (II) is 0.01 to 0.5.

7. A biaxially oriented polyester film according to any preceding claim, wherein the or each polyester thereof has a thermal crystallization parameter $\Delta$Tcg which satisfies [Formula 3] :

[Formula 3]

$$60\ (^{\circ}C) \leq \Delta Tcg \leq 150\ (^{\circ}C)$$

$$\Delta Tcg = Tc - Tg$$

Tc: Peak temperature of crystallization in DSC (°C)
Tg: Glass transition temperature in DSC (°C)

**8.** A biaxially oriented polyester film according to any preceding claim, laminated with a 0.01 to 3 μm thick adhesive layer.

**9.** A biaxially oriented polyester film according to any preceding claim, laminated with a metallic sheet.

**10.** A biaxially oriented polyester film according to claim 9, wherein the laminated metallic sheet is drawn.

**11.** A biaxially oriented polyester film according to claim 10, wherein the adhesive strength of the film to the metallic sheet is 1 1kg/15 mm or more.

**12.** A biaxially oriented polyester film according to claim 10, wherein the adhesive strength of the film to the metallic sheet after completion of drawing is 250 g/15 mm or more.

**13.** A biaxially oriented polyester film according to claim 1, wherein the optical density is 0.3 to 1.0.

**14.** A biaxially oriented polyester film according to claim 13, having a glossiness at least on one side of 50% or more.

**Patentansprüche**

**1.** Biaxial gereckte Polyesterfolie, umfassend einen Polyester, der 95 Mol-% oder mehr Ethylenterephthalat-Einheiten als eine Komponente enthält, wobei die Folie einen amorphen Elastizitätsmodul von 120 bis 200 kg/mm$^2$ und eine Bruchdehnung in Laufrichtung (S MD) sowie eine Bruchdehnung in Querrichtung (S TD) aufweist, für welche [Formel 1] und [Formel 2] gelten:

[Formel 1]

$$140\ \% \leq (S\ MD + STD)/2 \leq 300\ \%$$

S MD: Bruchdehnung in Laufrichtung
S TD: Bruchdehnung in Querrichtung

[Formel 2]

$$|SMD-STD| \leq 60\%.$$

**2.** Biaxial gereckte Polyesterfolie nach Anspruch 1, die einen Oberflächenreckungskoeffizienten von 0,01 bis weniger als 0,13 aufweist.

**3.** Biaxial gereckte Polyesterfolie nach Anspruch 1 oder 2, worin die Relaxationszeit T1ρ von 1,4 Benzolring-Kohlenstoffatomen in der Strukturanalyse durch hochauflösende Feststoff-NMR 150 ms oder mehr beträgt.

**4.** Biaxial gereckte Polyesterfolie nach einem der vorhergehenden Ansprüche, worin die Relaxationszeit T1ρ von Carbonyl-Kohlenstoffatomen in der Strukturanalyse durch hochauflösende Fetstoff-NMR 250 ms oder mehr beträgt.

**5.** Biaxial gereckte Polyesterfolie nach einem der vorhergehenden Ansprüche, worin die durch Röntgenbeugung erhaltene Korngröße der (100) Fläche 6 nm oder weniger beträgt.

**6.** Biaxial gereckte Polyesterfolie nach einem der vorhergehenden Ansprüche, wobei die Folie aus zumindest zwei Schichten (I) und (II) aus jeweiligen Polyestern besteht, die eine jeweilige Grenzviskosität (I) bzw. (II) aufweisen, die voneinander verschieden sind, und wobei die Differenz zwischen den jeweiligen Viskositäten (I) und (II) 0,01 bis 0,5 beträgt.

**7.** Biaxial gereckte Polyesterfolie nach einem der vorhergehenden Ansprüche, worin der oder jeder Polyester einen thermischen Kristallisationsparameter $\Delta$Tcg aufweist, für den [Formel 3] gilt:

[Formel 3]

$$60(°C) \leq \Delta Tcg \leq 150(°C)$$

$$\Delta Tcg = Tc - Tg.$$

Tc: Temperaturmaximum der Kristallisation bei DSC (°C)
Tg: Glastemperatur bei DSC (°C)

**8.** Biaxial gereckte Polyesterfolie nach einem der vorhergehenden Ansprüche, die mit einer 0,01 bis 3 µm dicken Klebstoffschicht laminiert ist.

**9.** Biaxial gereckte Polyesterfolie nach einem der vorhergehenden Ansprüche, die mit einer Metallfolie laminiert ist.

**10.** Biaxial gereckte Polyesterfolie nach Anspruch 9, worin die laminierte Metallfolie gezogen ist.

**11.** Biaxial gereckte Polyesterfolie nach Anspruch 10, worin die Haftfestigkeit der Folie an der Metallfolie 1 kg/15 mm oder mehr beträgt.

**12.** Biaxial gereckte Polyesterfolie nach Anspruch 10, worin die Haftfestigkeit der Folie an der Metallfolie nach Beendigung des Ziehens 250 g/15 mm oder mehr beträgt.

**13.** Biaxial gereckte Polyesterfolie nach Anspruch 1, worin die optische Dichte 0,3 bis 1,0 beträgt.

**14.** Biaxial gereckte Polyesterfolie nach Anspruch 13, die zumindest auf einer Seite einen Glanz von 50 % oder mehr aufweist.

**Revendications**

**1.** Film de polyester bi-orienté comprenant un polyester contenant 95% en mole ou plus d'unités de téréphtalate d'éthylène en tant que composant, lequel film a un module de Young amorphe de 120 à 200 kg/mm$^2$ et a un allongement de rupture dans le sens machine (S MD) et un allongement de rupture dans le sens transverse (S TD), satisfaisant la formule 1 et la formule 2.

formule 1

$$140\% \leq (S\ MD + S\ TD)/2 \leq 300\%$$

S MD : allongement de rupture dans le sens machine
S TD : allongement de rupture dans le sens transverse

formule 2

$$|S\ MD - S\ TD| \leq 60\%$$

**2.** Film de polyester bi-orienté selon la revendication 1, ayant un coefficient d'orientation de face de 0,01 à moins de 0,13.

3. Film de polyester bi-orienté selon la revendication 1 ou 2, dans lequel le temps de relaxation T1ρ des atomes de carbone de chaîne benzène 1,4 lors de l'analyse structurelle par RMN solide haute résolution est de 150 ms ou plus.

4. Film de polyester bi-orienté selon l'une quelconque des revendications précédentes, dans lequel le temps de relaxation T1p des atomes de carbone de fonction carbonyle lors d'une analyse structurelle par RMN solide haute résolution est de 250 ms ou plus.

5. Film de polyester bi-orienté selon l'une quelconque des revendications précédentes, dans lequel la granulométrie de la face (100) obtenue par diffraction des rayons X est de 6 nm ou moins.

6. Film de polyester bi-orienté selon l'une quelconque des revendications précédentes, lequel film se compose d'au moins deux couches (I) et (II) de polyesters respectifs, ayant des viscosités intrinsèques respectives (I) et (II) différentes l'une de l'autre et la différence entre lesdites viscosités respectives (I) et (II) est de 0,01 à 0,5.

7. Film de polyester bi-orienté selon l'une quelconque des revendications précédentes, dans lequel le polyester ou chacun des polyesters a un paramètre de cristallisation thermique ΔTcg qui satisfait la Formule 3 :

Formule 3

$$60 \, (^\circ C) \leq \Delta Tcg \leq 150 \, (C^\circ)$$

$$\Delta Tcg = Tc - Tg$$

Tc : température maximum de cristallisation calorimétrie à balayage différentielle (DSC) ($^\circ$C)
Tg : température de transition vitreuse en DSC ($^\circ$C)

8. Film de polyester bi-orienté selon l'une quelconque des revendications précédentes, laminé avec une couche adhésive de 0,01 à 3 μm d'épaisseur.

9. Film de polyester bi-orienté selon l'une quelconque des revendications précédentes, laminé avec une feuille de métal.

10. Film de polyester bi-orienté selon la revendication 9, dans lequel la feuille de métal laminée est étirée.

11. Film de polyester bi-orienté selon la revendication 10, dans lequel le pouvoir adhésif du film à la feuille métallique est de 1 kg/15 mm ou plus.

12. Film de polyester bi-orienté selon la revendication 10, dans lequel le pouvoir adhésif du film à la feuille métallique après achèvement de l'étirément est de 250g/15 mm ou plus.

13. Film de polyester bi-orienté selon la revendication 1, dans lequel la densité optique est de 0,3 à 1,0.

14. Film de polyester bi-orienté selon la revendication 13, ayant une brillance, au moins sur une face, de 50% ou plus.